# EUROPEAN PATENT APPLICATION

(11) **EP 2 590 302 A1**
(43) Date of publication of application: **08.05.2013**
(21) Application number: 11800522.2
(22) Date of filing: 17.05.2011
(51) Int. Cl.: H02K 1/14, F04D 13/06, F04D 29/00, H02K 1/18

(54) **MOTOR, PUMP USING THE MOTOR AS THE DRIVING SOURCE, AND HOT-WATER SUPPLY DEVICE, DISH WASHER, AND WASHING MACHINE THAT HAVE THE PUMP MOUNTED THEREIN**

(30) Priority: 30.06.2010 JP 2010149152
(71) Applicant: Panasonic Corporation, Osaka 571-8501 (JP)
(72) Inventor: NUNOMURA, Mahito, Osaka 540-6207 (JP); HASHIMOTO, Toshiharu, Osaka 540-6207 (JP); SUEMATSU, Shinji, Osaka 540-6207 (JP)
(74) Representative: Grünecker, Kinkeldey, Stockmair & Schwanhäusser
(86) International application number: PCT/JP2011/061263
(87) International publication number: WO 2012/002053

(57) **Abstract**

A motor includes a rotatable rotor (4) having magnets (42) arranged in a circumferential direction of the rotor (4), and a stator (5, 105) having magnetic poles (53, 153) located to face the magnets (42). Each magnetic pole (53, 153) includes a magnetic pole base section (54, 154), and extended sections (55, 155) extended from the magnetic pole base section (54, 154) in an axial direction of the rotor (4). At least the extended sections (55, 155) of the magnetic poles (53, 153) are composed of stacked plates (59a, 60a).

## Description

### TECHNICAL FIELD

The present invention relates to a motor, a pump using the motor as the driving source, and a hot-water supply device, a dishwasher, and a washing machine that have the pump mounted therein.

### BACKGROUND ART

In general, a drive power of a motor is dependent on an opposed area between a magnetic pole of a stator and a magnet of a rotor. When a width (a length in the axial direction) of the magnet is larger than a width of a magnetic pole base section of the magnetic pole in the respective surfaces opposed to each other, extended sections extended from the magnetic pole base section in the axial direction are conventionally provided (for example, refer to Patent Document 1).

Due to such a constitution, the drive power of the motor can be increased by increasing the opposed area between the magnetic pole of the stator and the magnet of the rotor. However, eddy current is generated and as a result, eddy current loss is caused if the extended sections are merely provided.

Thus, in Patent Document 1, slits are formed in the extended sections at predetermined intervals so that the eddy current is split up to prevent a reduction in drive efficiency of the motor.

### CITATION LIST

### PATENT LITERATURE

Patent Document 1: Japanese Patent Unexamined Publication No. 2009-095130

### SUMMARY OF INVENTION

However, when the slits are formed in the extended sections as described above, it is necessary to ensure an intensity of the extended sections provided with the slits. Thus, the extended sections are limited in size (thickness) or shape.

It is an object of the present invention to provide a motor, a pump using the motor as the driving source, and a hot-water supply device, a dishwasher, and a washing machine each equipped with the pump capable of reducing eddy current loss and improving drive efficiency while ensuring flexibility in size or shape of the extended sections.

In order to solve the conventional problem, a motor according to the present invention includes: a rotatable rotor having a magnet arranged in a circumferential direction of the rotor; and a stator having a magnetic pole located to face the magnet, the magnetic pole comprising a magnetic pole base section and an extended section extended from the magnetic pole base section in an axial direction of the rotor, wherein at least the extended section of the magnetic pole is composed of stacked plates.

According to the motor of the present invention, eddy current generated in the extended sections can be split up as in the case of the conventional technology since at least the extended sections of the magnetic poles are composed of the stacked plates. In this case, the extended sections are merely composed of the stacked plates, and it is not necessary to provide slits. Therefore, the extended sections are not limited in size or shape and accordingly, the motor capable of reducing eddy current loss and improving drive efficiency can be provided.

### BRIEF DESCRIPTION OF DRAWINGS

[FIG 1] FIG. 1 is a cross-sectional view of a pump employing a motor according to the first embodiment of the present invention.
[FIG 2] FIG. 2 is a schematic view of a stator according to the first embodiment. FIG. 2(a) is a plan view of the stator, and FIG. 2(b) is a cross-sectional view taken along the line A-A in FIG. 2(a).
[FIG. 3] FIG. 3 is an exploded perspective view of a stator core shown in FIG. 2.
[FIG. 4] FIG. 4 is a view showing a state in which a coil is wound on the stator core shown in FIG. 3.
[FIG. 5] FIG. 5 is a schematic view of the first modified example of the stator according to the first embodiment of the present invention. FIG. 5(a) is a plan view of the stator, and FIG. 5(b) is a cross-sectional view taken along the line B-B in FIG. 5(a).
[FIG. 6] FIG. 6 is an exploded perspective view of a stator core shown in FIG. 5.
[FIG 7] FIG. 7 is a schematic view of the second modified example of the stator according to the first embodiment of the present invention. FIG. 7(a) is a plan view of the stator, and FIG. 7(b) is a cross-sectional view taken along the line C-C in FIG. 7(a).
[FIG. 8] FIG. 8 is an exploded perspective view of a stator core shown in FIG. 7.
[FIG. 9] FIG. 9 is a view showing a state in which a coil is wound on the stator core shown in FIG. 8.
[FIG. 10] FIG. 10 is an explanatory view showing magnetic flux and eddy current flowing in a magnetic pole of the stator shown in FIG. 9. FIG. 10(a) is a cross-sectional view showing the same position as FIG. 7(b), and FIG. 10(b) is a plan view schematically showing an extended section.
[FIG 11] FIG. 11 is a cross-sectional view of a pump employing a motor according to the second embodiment of the present invention.
[FIG 12] FIG. 12 is a schematic view of a stator according to the second embodiment. FIG. 12(a) is a plan view of the stator, and FIG. 12(b) is a cross-sectional view taken along the line D-D in FIG. 12(a).
[FIG. 13] FIG. 13 is a view showing the stator shown in FIG. 12. FIG. 13(a) is an exploded perspective view of a stator core, and FIG. 13(b) is a view showing a state in which a coil is wound on the stator core shown in FIG. 13(a).
[FIG. 14] FIG. 14 is a schematic view of the first modified example of the stator according to the second embodiment of the present invention. FIG. 14(a) is a plan view of the stator, and FIG. 14(b) is a cross-sectional view taken along the line E-E in FIG. 14(a).
[FIG. 15] FIG. 15 is a view showing the stator shown in FIG. 14. FIG. 15(a) is an exploded perspective view of a stator core, and FIG. 15(b) is a view showing a state in which a coil is wound on the stator core shown in FIG. 15(a).
[FIG. 16] FIG. 16 is a view showing the second modified example of the stator according to the second embodiment of the present invention. FIG. 16(a) is an exploded perspective view of a stator core, and FIG. 16(b) is a view showing an assembled state of the stator core shown in FIG. 16(a).
[FIG. 17] FIG. 17 is an explanatory view showing magnetic flux and eddy current flowing in a magnetic pole of the stator shown in FIG 16. FIG. 17(a) is a partial cross-sectional view of a pump, FIG. 17(b) is a plan view schematically showing an extended section, and FIG. 17(c) is a perspective view schematically showing a fixing plate.
[FIG. 18] FIG. 18 is an exploded perspective view of the third example of the stator according to the second embodiment.
[FIG. 19] FIG. 19 is a view showing an assembled state of the stator shown in FIG. 18. FIG. 19(a) is a view showing a state in which a connecting section of a stator core is fitted in a core member, and FIG. 19(b) is a view showing a state in which a coil is wound on the stator core shown in FIG. 19(a).
[FIG. 20] FIG. 20 is a view showing the fourth example of the stator according to the second embodiment of the present invention. FIG. 20(a) is a view showing an assembling process of a core member, and FIG. 20(b) is a view showing a state in which the core member engages with a stator core shown in FIG. 20(a).
[FIG. 21] FIG. 21 is a schematic view of a stator according to the third embodiment of the present invention. FIG.21(a) is a plan view of the stator, and FIG.21(b) is a cross-sectional view taken along the line F-F in FIG. 21(a).
[FIG. 22] FIG. 22 is a schematic view of an internal structure of a dishwasher equipped with the pump of the present invention.
[FIG. 23] FIG. 23 is a circuit diagram of a hot water supply unit equipped with the pump of the present invention.
[FIG 24] FIG.24 is a schematic view of an internal structure of a washing machine equipped with the pump of the present invention.

### DESCRIPTION OF EMBODIMENTS

Hereinafter, the embodiments according to the present invention will be explained with reference to the drawings.

### [First embodiment]

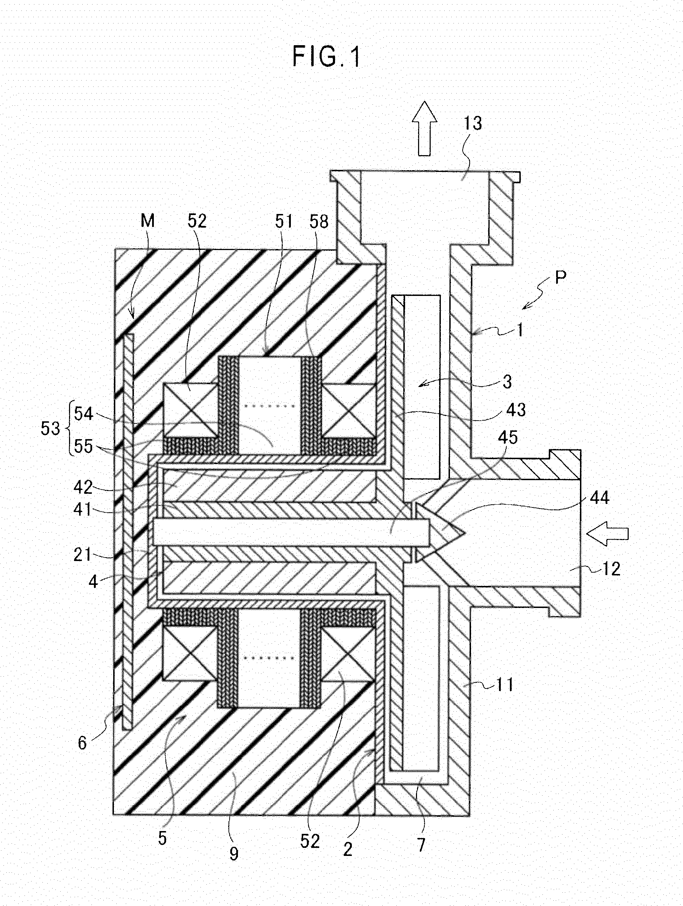

FIGS. 1 to 4 show a pump employing a motor according to the first embodiment of the present invention. First, a schematic constitution of the pump according to the present embodiment is explained with reference to FIG. 1.

As shown in FIG 1, a pump P according to the present embodiment employs a motor M serving as a drive source, and includes a pump case 1, a separation plate 2, an impeller 3, a rotor 4, a stator 5 and a control substrate 6.

The pump case 1 and the separation plate 2 are connected to each other to compose a pump chamber 7. The connecting portion between the pump case 1 and the separation plate 2 is provided with a sealing member (not shown in the figure) in order to ensure watertightness in the pump chamber 7. The impeller 3 and the rotor 4 are rotatably housed in the pump chamber 7 in an integrated manner. The rotor 4 is surrounded by the stator 5 to face each other while interposing the separation plate 2 therebetween so as to have a motor constitution with a so-called inner rotor structure.

The pump case 1 constitutes the pump chamber 7 together with the separation plate 2, and includes a case body 11 that defines the pump chamber 7, an intake opening 12 and an outlet opening 13. The intake opening 12 is provided in the middle of the upper surface of the case body 11 to introduce a liquid into the pump chamber 7. The outlet opening 13 is provided on the side wall of the case body 11 to discharge the liquid introduced in the pump chamber 7.

The separation plate 2 constitutes the pump chamber 7 together with the pump case 1 to keep the rotor 4 and the stator 5 away from water.

The impeller 3 is integrated with the rotor 4 to rotate together. The impeller 3 rotates to introduce the liquid from the intake opening 12 into the pump chamber 7 and discharge the introduced liquid from the outlet opening 13 to the outside of the pump P by use of centrifugal force.

The rotor 4 is formed in a cylindrical shape, and drives the impeller 3 to rotate together. The rotor 4 includes a rotor body 41 having a cylindrical shape, plural magnets 42 provided on the outer wall (on the circumference) of the rotor body 41 to provide a magnetic circuit (magnetic flux), and a supporting plate 43 to fix the impeller 3 to the rotor 4. According to the present embodiment, the rotor 4 rotates with a shaft 45 rotatably supported by a shaft supporting member 44 provided in the pump case 1 and an end plate 21 of the separation plate 2. Here, a gap (clearance) is provided between the magnets 42 and the separation plate 2 sufficient to prevent contact of the rotor 4 with the other members during rotation.

The stator 5 includes a stator core 51 formed by plural steel plates 58 stacked in layers in the present embodiment, ring-like coils 52 wound on the stator core 51, and magnetic poles 53 provided to face the magnets 42 of the rotor 4. In the motor M according to the present embodiment, as described in detail below, the magnetic poles 53 of the stator 5 include magnetic pole base sections 54, each of which has a width smaller than a width (a length in the axial direction) of each magnet 42 in the respective surfaces opposed to each other. However, a drive power of the motor M can be increased by providing extended sections 55 on both sides of each magnetic pole base section 54 so as to increase the opposed area between the magnetic pole base section 54 and the magnet 42.

The control substrate 6 receives a signal from a position detecting sensor (not shown in the figure) to detect a rotating position of the rotor 4 to control current applied to the ring-like coils 52. The control substrate 6 then controls a magnetic field generated in the ring-like coils 52 according to the rotating position of the rotor 4. The back side of the pump P including the control substrate 6, that is, the entire pump P excluding the pump case 1 is covered with a mold resin 9. Namely, in the pump P, the separation plate 2, the stator 5 and the control substrate 6 are covered with the mold resin 9 so as to ensure the intensity of the pump P.

According to the pump P constituted as described above, the current is applied to the ring-like coils 52 by the control substrate 6, and the magnetic field generated by the current applied to the ring-like coils 52 is transmitted to the magnets 42 of the rotor 4 from the magnetic poles 53 of the stator 5. As a result, the impeller 3 integrated with the rotor 4 rotate together with the shaft 45 by the magnetic attraction and repulsion of the magnets 42. Thereafter, the pump operation is started in association with the rotation of the impeller 3. The liquid is then introduced into the pump chamber 7 from the intake opening 12, and the introduced liquid is discharged from the outlet opening 13 to the outside of the pump P by use of the centrifugal force of the impeller 3.

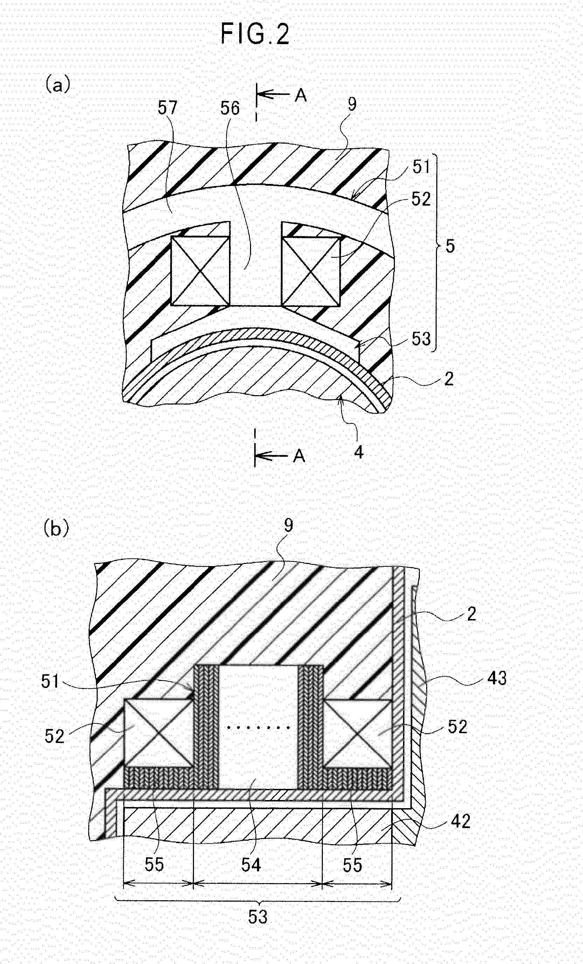

Next, the motor M that is characteristic of the present embodiment is explained in detail with reference to FIGS. 2 to 4.

As described above, the motor M according to the present embodiment mainly includes the rotatable rotor 4 having the magnets 42 arranged in the circumferential direction thereof, and the stator 5 having the stator core 51 formed by the plural steel plates 58 stacked in layers on which the ring-like coils 53 are wound.

As shown in FIG.S. 2 and 3, the stator core 51 in the present embodiment includes a circular section 57 located on the circumference thereof, the magnetic pole base section 54 of the magnetic pole 53 provided to face the magnet 42, and a connecting section 56 projecting toward the rotor 4 from the circular section 57 to connect the magnetic pole base section 54 to the circular section 57. In the present embodiment, the steel plates 58 including plate materials 54a to 57a of these members are stacked in, for example, twenty to thirty layers in the axial direction of the pump P.

The plural (eight in the present embodiment) magnetic pole base sections 54 are provided in the circumferential direction of the stator core 51 corresponding to the pole number of the magnets 42. The magnetic pole base sections 54 are connected to the circular section 57 via the connecting sections 56. In other words, in the present embodiment, the eight connecting sections 56 project inwardly in the radial direction from the circular section 57, and are provided with the magnetic pole base sections 54 at the tips thereof.

As described above, the width of each magnetic pole base section 54 is smaller than the width (the length in the axial direction) of each magnet 42 in the respective surfaces opposed to each other. In the present embodiment, the extended sections 55 are provided approximately in parallel to the width direction (the axial direction) of the magnets 42, and the extended sections 55 are composed of stacked plates 59a.

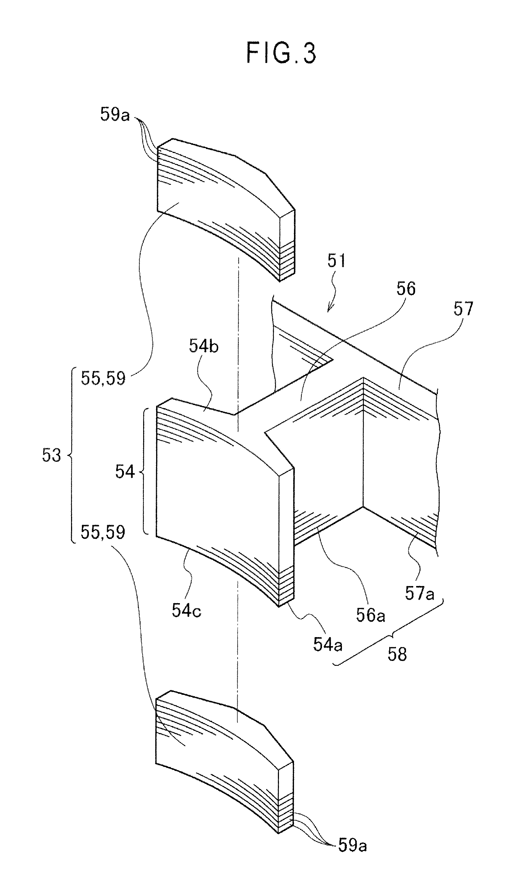

In particular, as shown in FIG. 3, core members 59 in which the extended sections 55 are formed by stacking the plural stacked plates 59a are attached to the magnetic pole base section 54 of the stator core 51 in the present embodiment. In this case, it is preferable to use a holding tool similar in shape to the outer diameter of the rotor 4 and stack the core members 59 on the magnetic pole base section 54 along the holding tool. It is effective to remove excessive parts of the core members 59 along the outer diameter of the rotor 4 after stacking.

The stacked plates 59a of the extended sections 55 in the present embodiment are stacked in the axial direction of the pump P, that is, in the extended direction of the extended sections 55, in the same manner as the steel plates 58 of the stator core 51. The stacked plates 59a preferably have the same thickness as the steel plates 58 of the stator core 51, so that both plates can be cut out of the same plate members. Although the stacked plates 59a of the extended sections 55 are made of steel plates as in the case of the stator core 51, the stacked plates 59a are not limited to the steel plates.

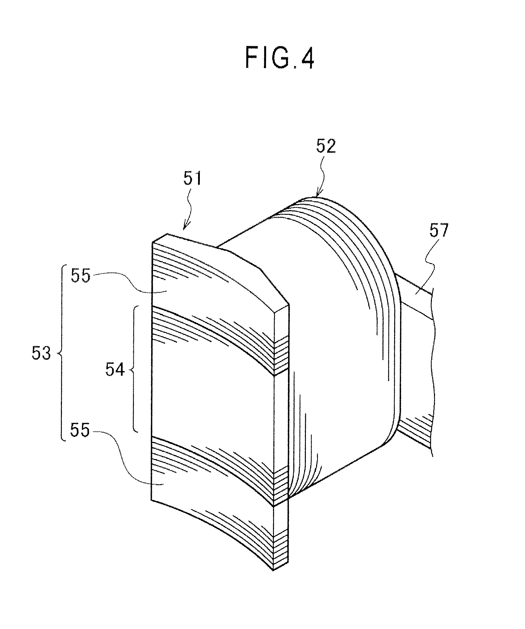

As shown in FIG.4, the ring-like coil 52 is wound on the connecting section 56 to fill the gap between the magnetic pole 53 and the circular section 57. In this case, the winding range of the ring-like coil 52 preferably includes the extended sections 55.

According to the constitution of the motor M of the present embodiment, the drive force can be increased by providing the extended sections 55 extended in the axial direction of the rotor 4 from the magnetic pole base section 54 to increase the opposed area between the magnetic pole 53 of the stator 5 and the magnet 42 of the rotor 4. In addition, the eddy current generated in the extended sections 55 can be split up as in the case of the conventional technology since at least the extended sections 55 of the magnetic pole 53 are composed of the stacked plates 59a.

In other words, since the extended sections 55 are provided with insulating sections obtained by stacking the stacked plates 59a in the axial direction of the pump, the eddy current is split up due to the insulating sections. As a result, the eddy current and heat generation of the motor M caused by the eddy current can be reduced. In this case, the extended sections 55 are merely composed of the stacked plates 59a, and it is not necessary to provide slits required in the conventional technology. Therefore, the extended sections 55 are not limited in size or shape and accordingly, the motor M capable of reducing eddy current loss and improving drive efficiency can be provided.

According to the present embodiment, it is possible to relatively easily manufacture the motor M in which the eddy current loss is reduced due to the constitution in which the core members 59 including the extended sections 55 composed of the plural stacked plates 59a are attached to the magnetic pole base section 54 of the stator core 51.

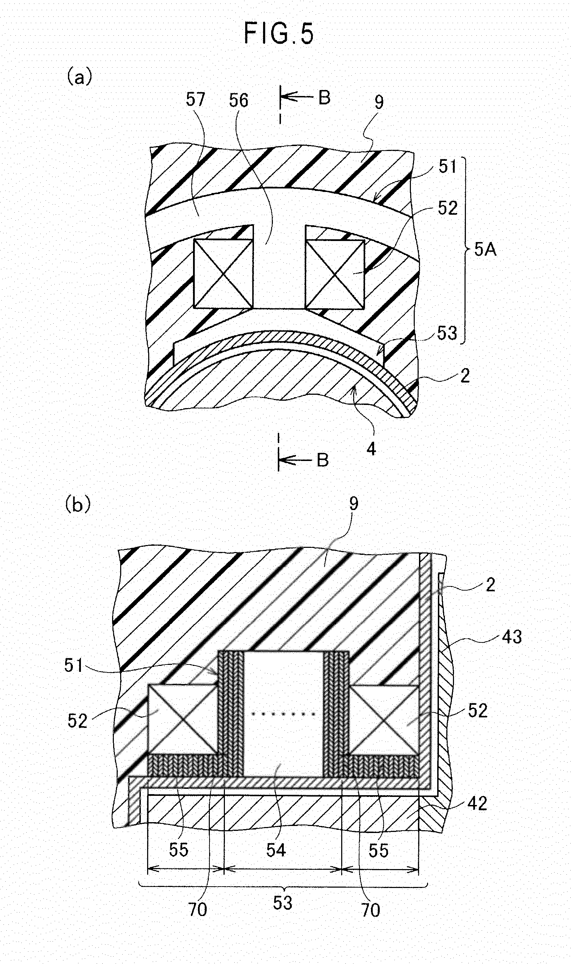

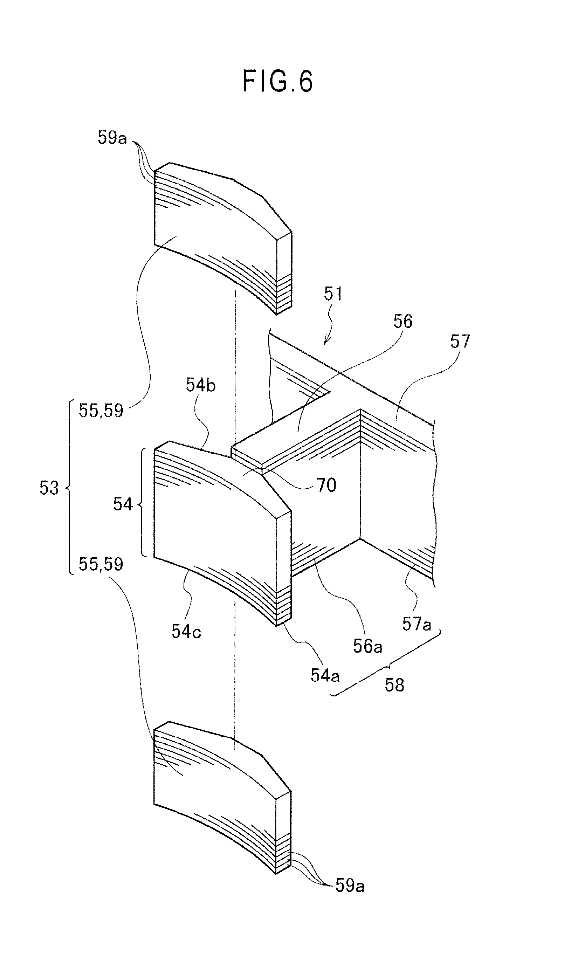

Next, modified examples of the stator 5 which is one of the components of the motor M according to the first embodiment will be explained with reference to FIGS. 5 to 10. Note that, in the following explanations for the modified examples, the same elements as in the stator 5 in the first embodiment are indicated by the common reference numerals, and the overlapped explanations will not be repeated. FIG. 5 and FIG.6 show the first modified example.

A stator 5A of the first modified example includes, as in the case of the stator 5 according to the first embodiment, the stator core 51 provided with the circular section 57, the magnetic pole base section 54 and the connecting section 56 that connects the magnetic pole base section 54 to the circular section 57. The core members 59 in which the extended sections 55 are composed of the plural stacked plates 59a are attached to the magnetic pole base section 54 of the stator core 51.

The stator 5A of the first modified example differs from the stator 5 of the first embodiment mainly in that, as shown in FIG. 6, recesses 70 are provided at contact surfaces 54b and 54c of the magnetic pole base section 54 with the core members 59. The recesses 70 can be easily formed in such a manner that the outermost steel plates 58 of the magnetic pole base section 54 in the stator core 51 composed of the plural steel plates 58 are cut out.

According to the constitution of the stator 5A of the first modified example, the core members 59 can be easily positioned since the recesses 70 are provided at the contact surfaces 54b and 54c of the magnetic pole base section 54 with the core members 59. As a result, the core members 59 can be easily attached (fixed) to the magnetic pole base section 54 with high accuracy.

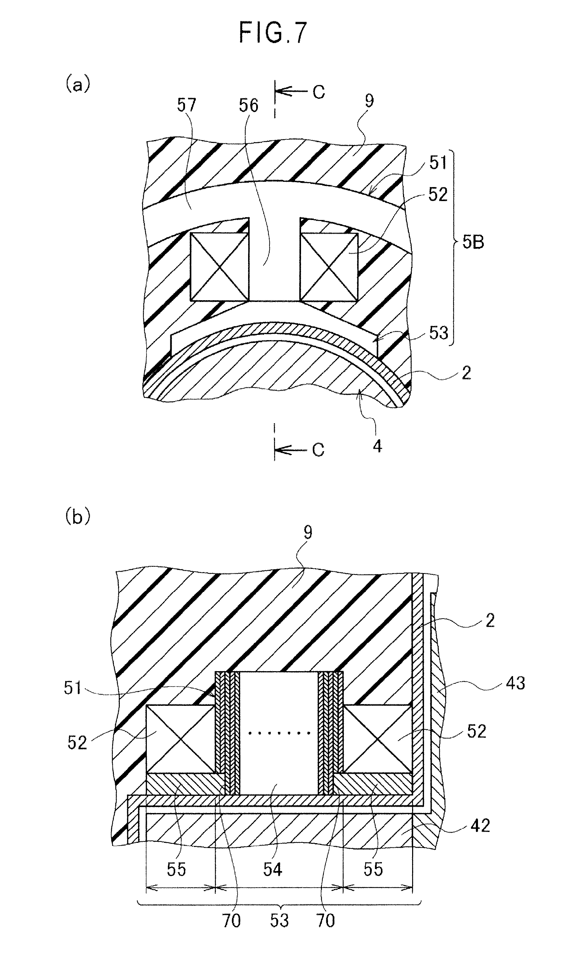

FIGS. 7 to 10 show the second modified example of the stator 5 according to the first embodiment.

A stator 5B of the second modified example includes, as in the cases of the stators 5 and 5A according to the first embodiment and the first modified example, the stator core 51 provided with the circular section 57, the magnetic pole base section 54 and the connecting section 56. The core members 59 in which the extended sections 55 are composed of the plural stacked plates 59a are attached to the magnetic pole base section 54 of the stator core 51.

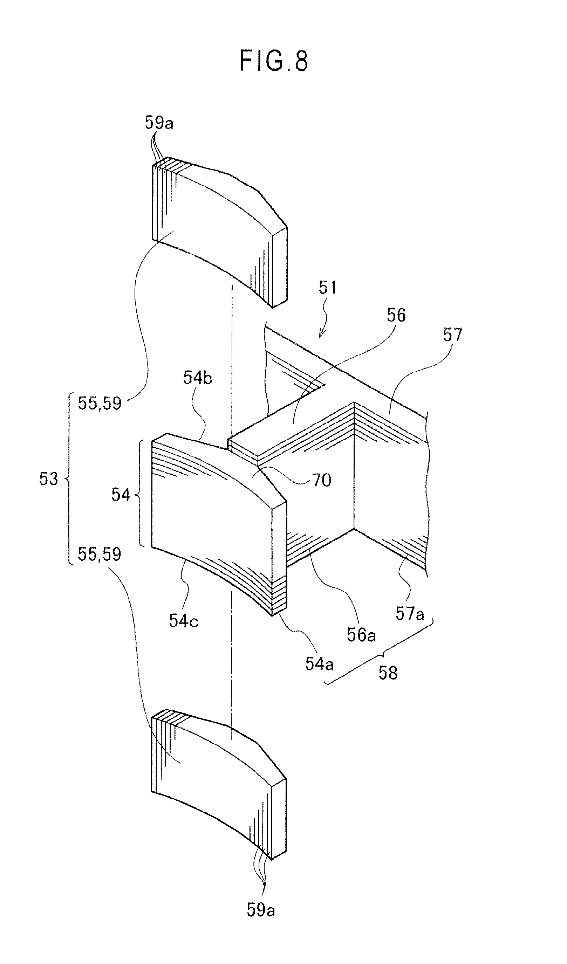

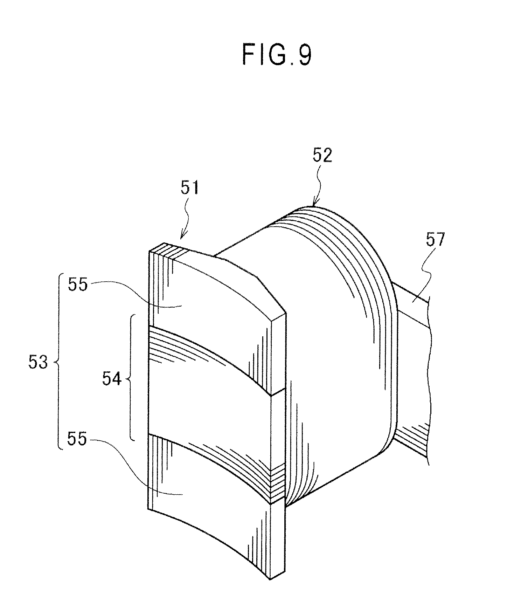

The stator 5B of the second modified example differs from the stators 5 and 5A according to the first embodiment and the first modified example mainly in that the stacked plates 59a are stacked in the circumferential direction of the rotor 4 as shown in FIG.8 and FIG. 9.

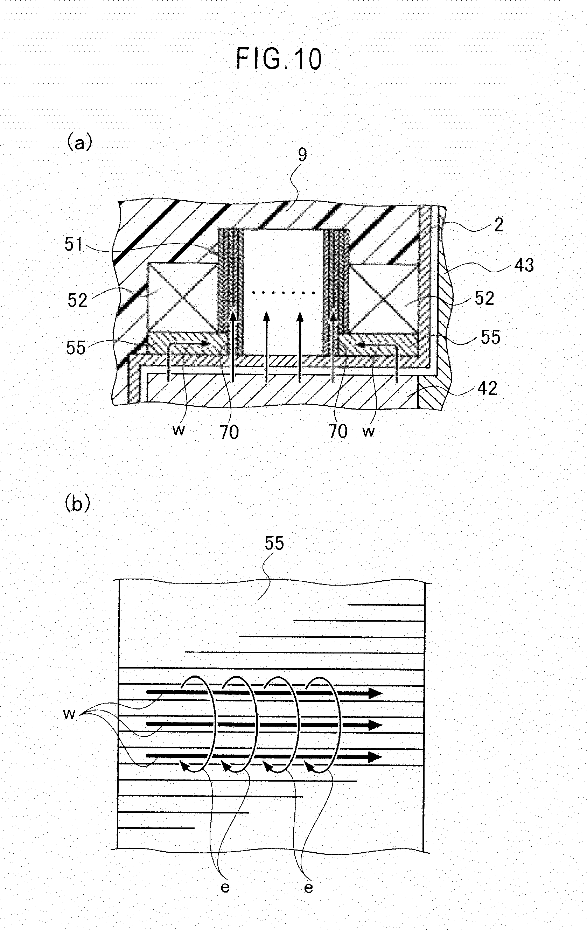

As shown in FIGS. 10(a) and 10(b), magnetic flux w generated in the extended sections 55 from the magnet 42 of the rotor 4 flows from the extended sections 55 to the magnetic pole base section 54, and eddy current e flows around the magnetic flux w accordingly. Therefore, by stacking the stacked plates 59a in the circumferential direction of the rotor 4 that is substantially perpendicular to the extended direction of the extended sections 59 (the axial direction of the rotor 4), the eddy current e can be insulated in the flowing direction of the eddy current e as shown in FIG. 10(b). As a result, the eddy current e can be split up effectively.

According to the constitution of the stator 5B of the second modified example, since the stacked plates 59a are stacked in the circumferential direction of the rotor 4, the motor M in which the eddy current e is split up effectively and the drive efficiency is thus improved can be provided.

The stator 5B of the second modified example may also be provided with the recesses 70 at the contact surfaces 54b and 54c of the magnetic pole base section 54 with the core members 59 as in the case of the stator 5A of the first modified example, so that the core members 59 can be easily attached (fixed) to the magnetic pole base section 54 with high accuracy.

### [Second embodiment]

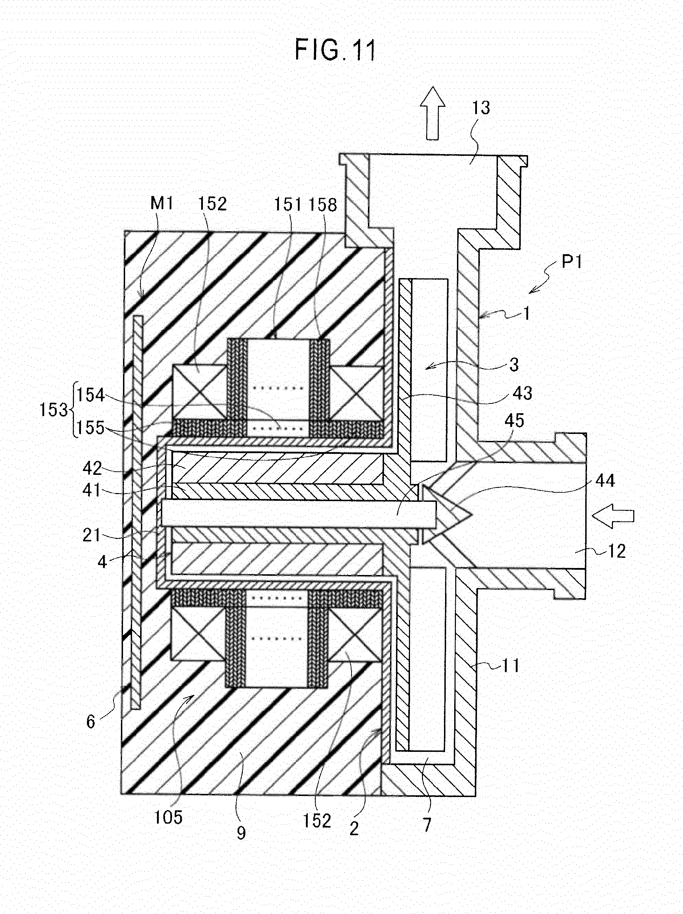

FIGS. 11 to 13 show a pump employing a motor according to the second embodiment of the present invention. First, a schematic constitution of the pump according to the present embodiment is explained with reference to FIG. 11.

As shown in FIG. 11, a pump P1 according to the present embodiment employs a motor M1 serving as a drive source, and includes a pump case 1, a separation plate 2, an impeller 3, a rotor 4, a stator 105 and a control substrate 6.

The pump case 1 and the separation plate 2 are connected to each other to compose a pump chamber 7. The connecting portion between the pump case 1 and the separation plate 2 is provided with a sealing member (not shown in the figure) in order to ensure watertightness in the pump chamber 7. The impeller 3 and the rotor 4 are rotatably housed in the pump chamber 7 in an integrated manner. The rotor 4 is surrounded by the stator 105 to face each other while interposing the separation plate 2 therebetween so as to have a motor constitution with a so-called inner rotor structure.

The pump case 1 constitutes the pump chamber 7 together with the separation plate 2, and includes a case body 11 that defines the pump chamber 7, an intake opening 12 and an outlet opening 13. The intake opening 12 is provided in the middle of the upper surface of the case body 11 to introduce a liquid into the pump chamber 7. The outlet opening 13 is provided on the side wall of the case body 11 to discharge the liquid introduced in the pump chamber 7.

The separation plate 2 constitutes the pump chamber 7 together with the pump case 1 to keep the rotor 4 and the stator 105 away from water.

The impeller 3 is integrated with the rotor 4 to rotate together. The impeller 3 rotates to introduce the liquid from the intake opening 12 into the pump chamber 7 and discharge the introduced liquid from the outlet opening 13 to the outside of the pump P by use of centrifugal force.

The rotor 4 is formed in a cylindrical shape, and drives the impeller 3 to rotate together. The rotor 4 includes a rotor body 41 having a cylindrical shape, plural magnets 42 provided on the outer wall (on the circumference) of the rotor body 41 to provide a magnetic circuit (magnetic flux), and a supporting plate 43 to fix the impeller 3 to the rotor 4. According to the present embodiment, the rotor 4 rotates with a shaft 45 rotatably supported by a shaft supporting member 44 provided in the pump case 1 and an end plate 21 of the separation plate 2. Here, a gap (clearance) is provided between the magnets 42 and the separation plate 2 sufficient to prevent contact of the rotor 4 with the other members during rotation.

The stator 105 includes a stator core 151 formed by plural steel plates 158 stacked in layers in the present embodiment, ring-like coils 152 wound on the stator core 151, and magnetic poles 153 provided to face the magnets 42 of the rotor 4. In the motor M according to the present embodiment, as described in detail below, the magnetic poles 153 of the stator 105 include magnetic pole base sections 154, each of which has a width smaller than a width (a length in the axial direction) of each magnet 42 in the respective surfaces opposed to each other. However, a drive power of the motor M1 can be increased by providing extended sections 155 on both sides of each magnetic pole base section 154 so as to increase the opposed area between the magnetic pole base section 154 and the magnet 42.

The control substrate 6 receives a signal from a position detecting sensor (not shown in the figure) to detect a rotating position of the rotor 4 to control current applied to the ring-like coils 152. The control substrate 6 then controls a magnetic field generated in the ring-like coils 152 according to the rotating position of the rotor 4. The back side of the pump P1 including the control substrate 6, that is, the entire pump P1 excluding the pump case 1 is covered with a mold resin 9. Namely, in the pump P1, the separation plate 2, the stator 105 and the control substrate 6 are covered with the mold resin 9 so as to ensure the intensity of the pump P1.

According to the pump P constituted as described above, the current is applied to the ring-like coils 152 by the control substrate 6, and the magnetic field generated by the current applied to the ring-like coils 152 is transmitted to the magnets 42 of the rotor 4 from the magnetic poles 153 of the stator 105. As a result, the impeller 3 integrated with the rotor 4 rotate together with the shaft 45 by the magnetic attraction and repulsion of the magnets 42. Thereafter, the pump operation is started in association with the rotation of the impeller 3. The liquid is then introduced into the pump chamber 7 from the intake opening 12, and the introduced liquid is discharged from the outlet opening 13 to the outside of the pump P1 by use of the centrifugal force of the impeller 3.

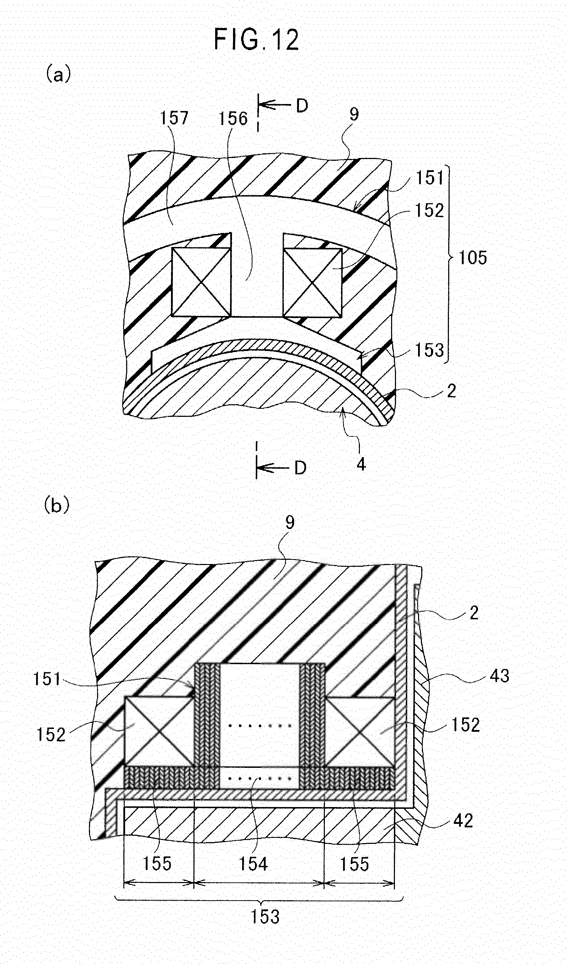

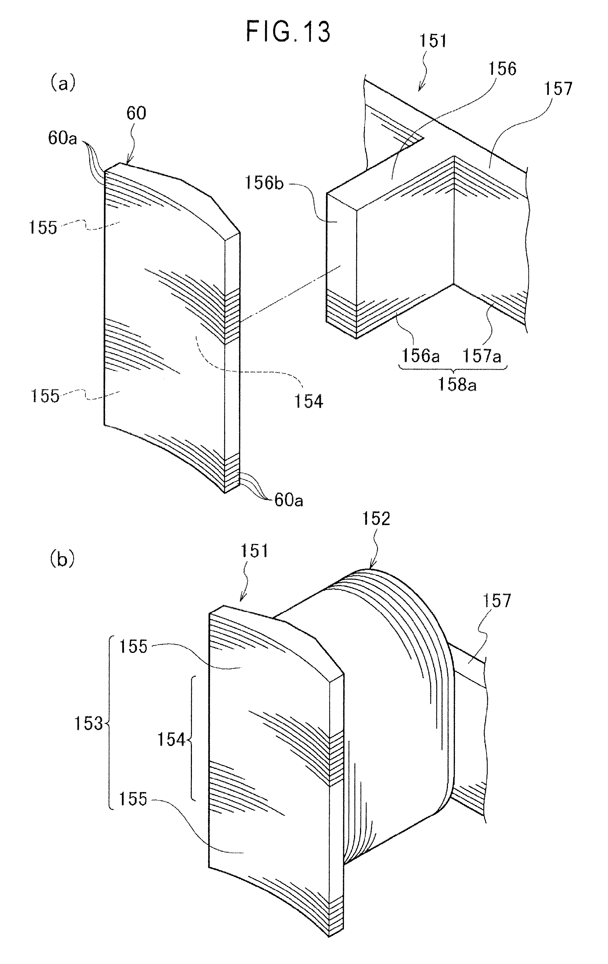

Next, the motor M1 that is characteristic of the present embodiment is explained in detail with reference to FIGS. 12 and 13.

As described above, the motor M1 according to the present embodiment mainly includes the rotatable rotor 4 having the magnets 42 arranged in the circumferential direction thereof, and the stator 105 having the stator core 151 formed by the plural steel plates 158 stacked in layers on which the ring-like coils 153 are wound.

As shown in FIG. 13(a), the stator core 51 in the present embodiment includes a circular section 157 located on the circumference thereof, and a connecting section 156 projecting toward the rotor 4 from the circular section 157. In the present embodiment, the steel plates 158 including plate materials 156a and 157a of these members are stacked in, for example, twenty to thirty layers in the axial direction of the pump P.

In the present embodiment, a core member 60 in which the magnetic pole base section 154 is integrated with the extended sections 155 is fixed to the connecting section 156 of the stator core 151 to compose the magnetic pole 153 in the stator 105. In other words, the core member 60 includes the magnetic pole base section 154 of which the width is smaller than the width (the length in the axial direction) of the magnet 42 in the respective surfaces opposed to each other, and the extended sections 155 extended in the axial direction of the rotor 4.

The plural (eight in the present embodiment) magnetic poles 153 are provided in the circumferential direction of the stator core 151 corresponding to the pole number of the magnets 42. In the present embodiment, the eight connecting sections 156 project inwardly in the radial direction from the circular section 157, and are provided with the magnetic poles 153 at the tips thereof.

In the present embodiment, at least the extended sections 155 in the magnetic pole 153 composed of the magnetic pole base section 154 and the extended sections 155 are composed of plural stacked plates 60a.

In particular, according to the present embodiment, the core member 60 in which the magnetic pole base section 154 is integrated with the extended sections 155 is composed of the plural stacked plates 60a. The core member 60 is fixed to a front surface 156b of the connecting section 156 of the stator core 151 by adhesive bonding.

The stacked plates 60a of the core member 60 are stacked in the axial direction of the pump P in the same manner as the steel plates 158 of the stator core 151 in the present embodiment. The stacked plates 60a preferably have the same thickness as the steel plates 158 of the stator core 151, so that both plates can be cut out of the same plate members. Although the stacked plates 60a of the core member 60 are made of steel plates as in the case of the stator core 151, the stacked plates 60a are not limited to the steel plates.

As shown in FIG.13(b), the ring-like coil 152 is wound on the connecting section 156 to fill the gap between the magnetic pole 153 and the circular section 157. In this case, the winding range of the ring-like coil 152 preferably includes the extended sections 155.

According to the constitution of the motor M1 of the present embodiment, the drive force can be increased by providing the extended sections 155 extended in the axial direction of the rotor 4 from the magnetic pole base section 154 to increase the opposed area between the magnetic pole 153 and the magnet 42. In addition, the eddy current generated in the extended sections 155 can be split up as in the case of the conventional technology since at least the extended sections 155 of the magnetic pole 153 are composed of the stacked plates 60a.

In other words, since the extended sections 155 are provided with insulating sections obtained by stacking the stacked plates 60a in the axial direction of the pump, the eddy current is split up due to the insulating sections. As a result, the eddy current and heat generation of the motor M1 caused by the eddy current can be reduced. In this case, the extended sections 155 are merely composed of the stacked plates 60a, and it is not necessary to provide slits required in the conventional technology. Therefore, the extended sections 155 are not limited in size or shape and accordingly, the motor M capable of reducing eddy current loss and improving drive efficiency can be provided.

According to the present embodiment, it is possible to relatively easily manufacture the motor M1 in which the eddy current loss is reduced due to the constitution in which the core member 60 including the extended sections 155 integrated with the magnetic pole base section 154 and composed of the plural stacked plates 60a is attached to the connecting section 156 of the stator core 151.

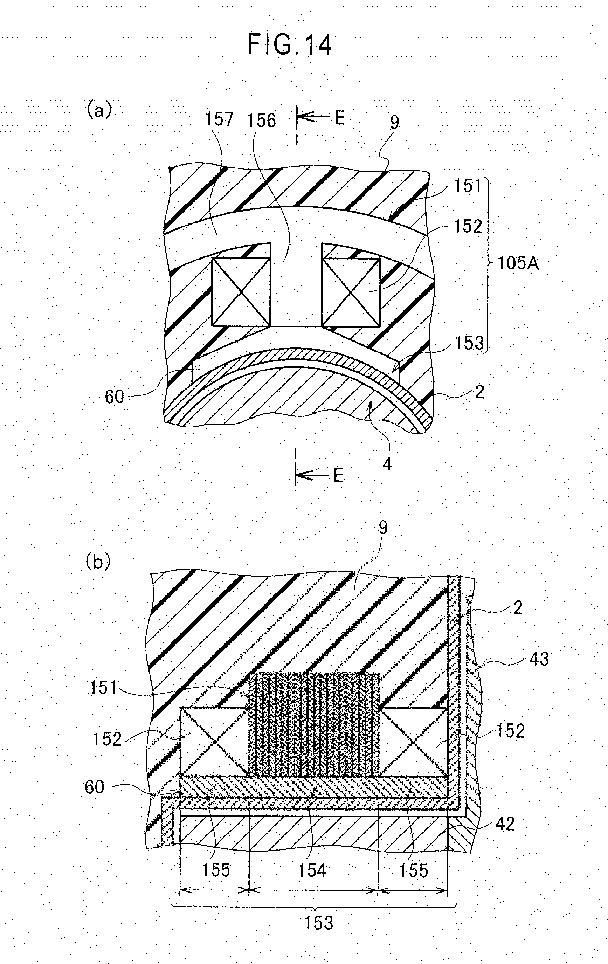

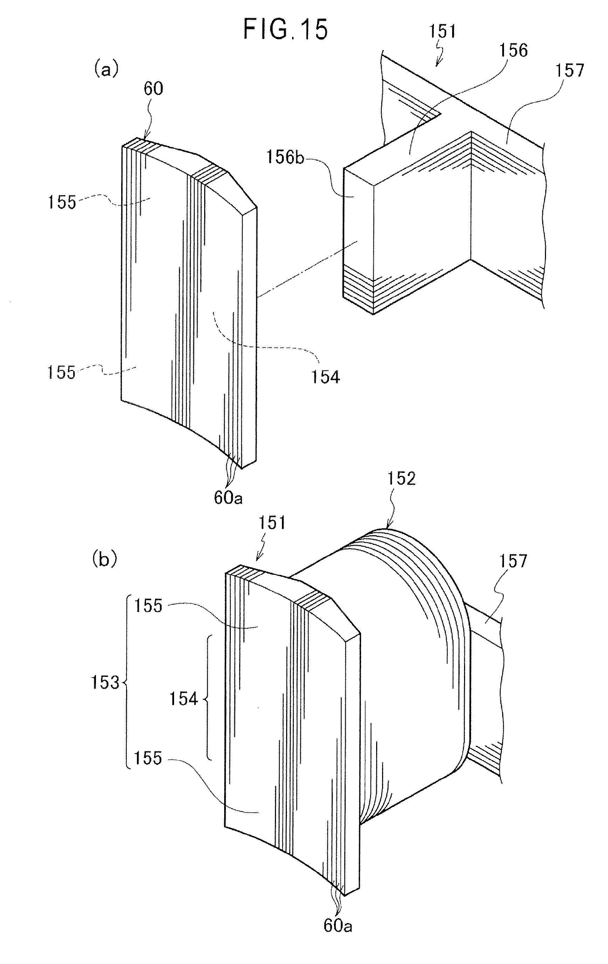

Next, modified examples of the stator 105 which is one of the components of the motor M1 according to the second embodiment will be explained with reference to FIGS. 14 to 20. Note that, in the following explanations for the modified examples, the same elements as in the stator 105 in the second embodiment are indicated by the common reference numerals, and the overlapped explanations will not be repeated. FIG.14 and FIG.15 show the first modified example.

A stator 105A of the first modified example includes, as in the case of the stator 105 according to the second embodiment, the stator core 151 provided with the circular section 157 and the connecting section 156 projecting from the circular section 157 toward the rotor 4. The core member 60 including the extended sections 155 integrated with the magnetic pole base section 154 and composed of the plural stacked plates 60a is attached to the connecting section 156 of the stator core 151.

The stator 105A of the first modified example differs from the stator 105 of the first embodiment mainly in that the stacked plates 60a are stacked in the circumferential direction of the rotor 4 as shown in FIG.15(a).

As described in the second modified example of the first embodiment, magnetic flux generated in the extended sections 155 from the magnet 42 of the rotor 4 flows from the extended sections 155 to the magnetic pole base section 154, and eddy current flows around the magnetic flux accordingly. Therefore, by stacking the stacked plates 60a in the circumferential direction of the rotor 4 that is substantially perpendicular to the extended direction of the extended sections 155 (the axial direction of the rotor 4), the eddy current can be insulated in the flowing direction of the eddy current. As a result, the eddy current can be split up effectively.

According to the constitution of the stator 105A of the first modified example, since the stacked plates 60a are stacked in the circumferential direction of the rotor 4, the motor M1 in which the eddy current is split up effectively and the drive efficiency is thus improved can be provided.

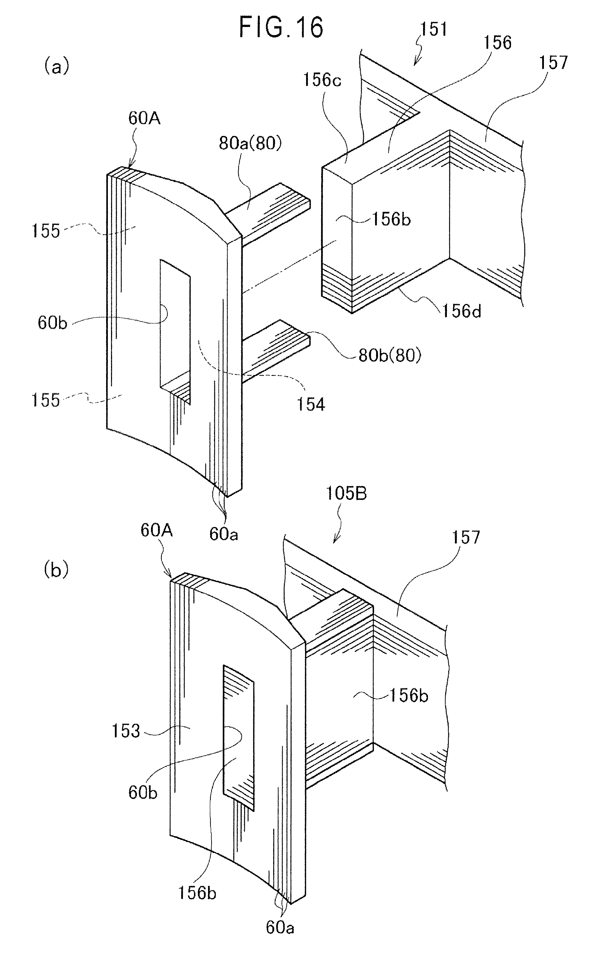

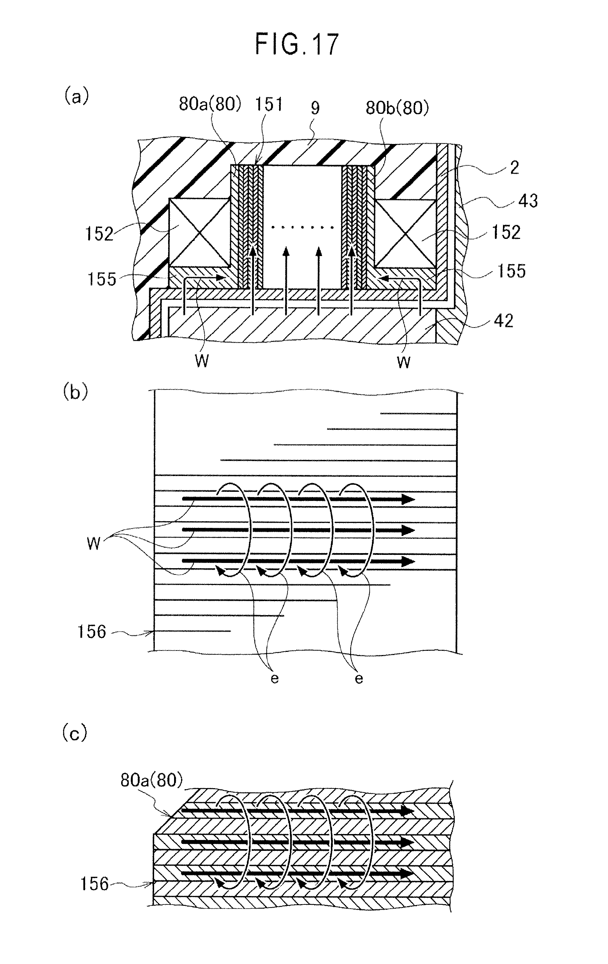

FIGS. 16 and 17 show the second modified example of the stator 105 according to the second embodiment.

A stator 105B of the second modified example includes, as in the case of the stator 105A according to the first modified example, the stator core 151 provided with the circular section 157 and the connecting section 156 projecting from the circular section 157 toward the rotor 4. A core member 60A including the magnetic pole base section 154 integrated with the extended sections 155 and composed of the plural stacked plates 60a is attached to the connecting section 156 of the stator core 151.

The stator 105B of the second modified example differs from the stator 105A of the first modified example mainly in that, as shown in FIG. 16(a), the core member 60A is provided with a fixing section 80 attached to the connecting section 156 of the stator core 151.

The fixing section 80 in the present embodiment is composed of a pair of fixing plates 80a and 80b extended to hold outermost layers 156c and 156d of the connecting section 156 therebetween. The fixing plates 80a and 80b are composed of plural plates stacked in the circumferential direction of the rotor 4 in the same manner as the stacked plates 60a of the core member 60.

The core member 60A is provided with an opening 60b approximately in the middle thereof to receive the front surface 156b of the connecting section 156 when fixing the connecting section 156 of the stator core 151 to the core member 60A. As shown in FIG. 16(b), the core member 60A engages with the connecting section 156 of the stator core 151 by the pair of fixing plates 80a and 80b and the opening 60b.

According to the constitution of the stator 105B of the second modified example, the core member 60A is provided with the fixing section 80 attached to the connecting section 156 of the stator core 151. Accordingly, the intensity and durability of the core member 60A can be improved compared with the constitution of the second embodiment in which the core member 60 is attached to the front surface 156b of the connecting section 156.

In addition, as shown in FIGS. 17(a) and 17(b), the eddy current e that tends to flow around the magnetic flux w can be split up effectively since the stacked plates 60a of the core member 60A are stacked in the circumferential direction of the rotor 4. Further, as shown in FIG. 17(c), the eddy current e flowing in the pair of fixing plates 80a and 80b can also be split up effectively.

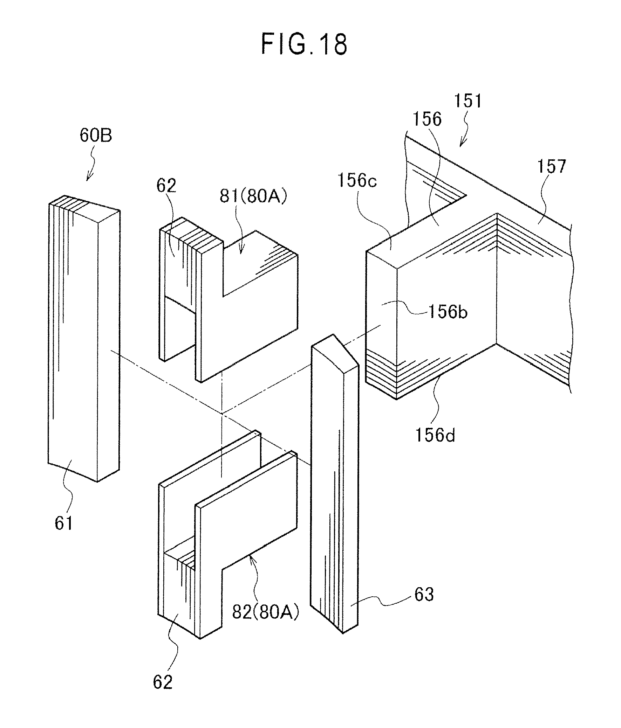

FIGS. 18 to 20 show the third modified example of the stator 105 according to the second embodiment.

A stator 105C of the third modified example includes, as in the case of the stator 105B according to the second modified example, the stator core 151 provided with the circular section 157 and the connecting section 156 projecting from the circular section 157 toward the rotor 4. A core member 60B including the magnetic pole base section 154 integrated with the extended sections 155 and composed of the plural stacked plates 60a is attached to the connecting section 156 of the stator core 151.

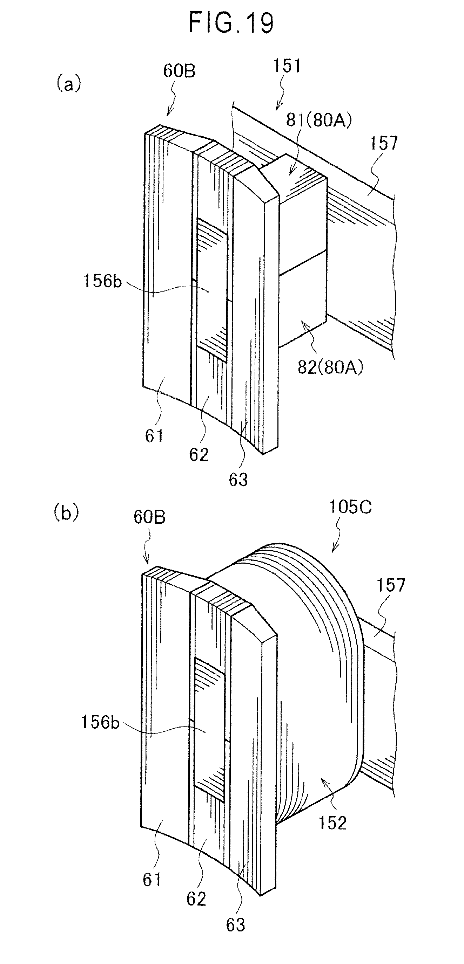

The stator 105C of the third modified example differs from the stator 105B of the second modified example mainly in that, as shown in FIG.18 and FIG. 19, the core member 60B is formed in such a manner that the connecting section 156 of the stator core 151 can be fitted in a fixing section 80A.

In particular, the core member 60B in the present embodiment is separated into components 61, 62 and 63. A pair of fixing cylindrical sections 81 and 82 having the same shape integrated so that the connecting section 156 is fitted therein is formed in the middle components 62 of the components 61, 62 and 63.

According to the constitution of the stator 105C of the third modified example, the core member 60B is formed in such a manner that the connecting section 156 of the stator core 151 can be fitted in the fixing section 80A. Accordingly, the intensity and durability of the core member 60B can be improved compared with the constitution of the second embodiment in which the core member 60 is attached to the front surface 156b of the connecting section 156. In addition, the connecting section 156 of the stator core 151 is surrounded by the fixing cylindrical sections 81 and 82, which have the different constitution from the fixing section 80 of the core member 60A in the second modified example. Therefore, the durability of the core member 60B against the winding of the ring-like coil 52 can be further improved.

According to the stator 105C of the third modified example, the connecting section 156 of the stator 151 is inserted into the fixing section 80A so that the core member 60B can be fixed to the connecting section 156.

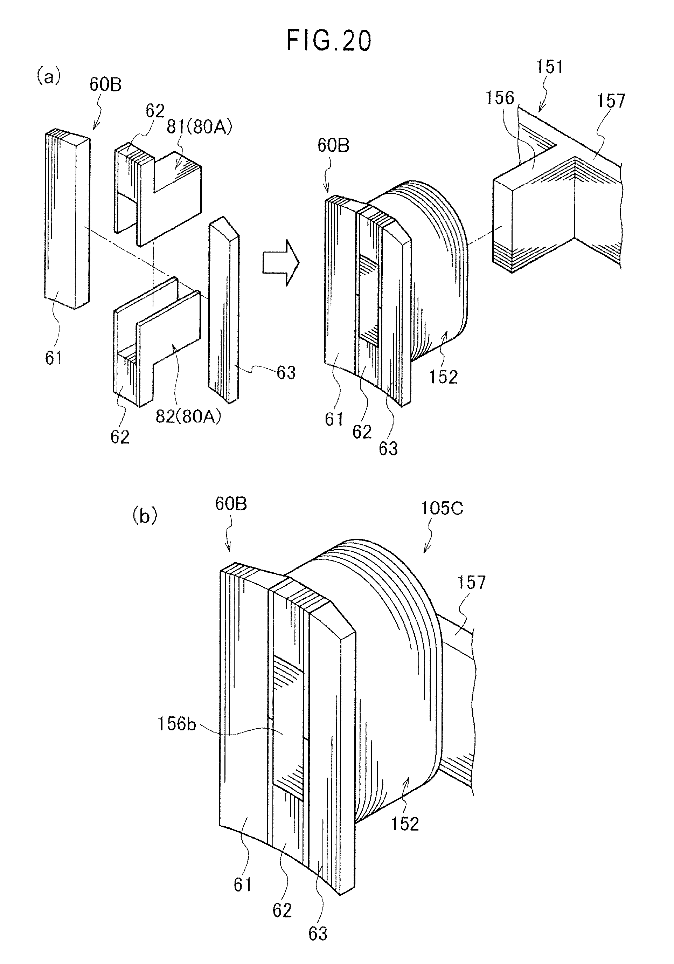

According to the constitution described above, as shown in FIG 20, the components 61, 62 and 63 of the core member 60B are assembled, and the ring-like coil 152 is wound on the fixing cylindrical sections 81 and 82, followed by fixing the core member 60B to the connecting section 156. As a result, the assembling process of the stator 105C can be further simplified.

### [Third embodiment]

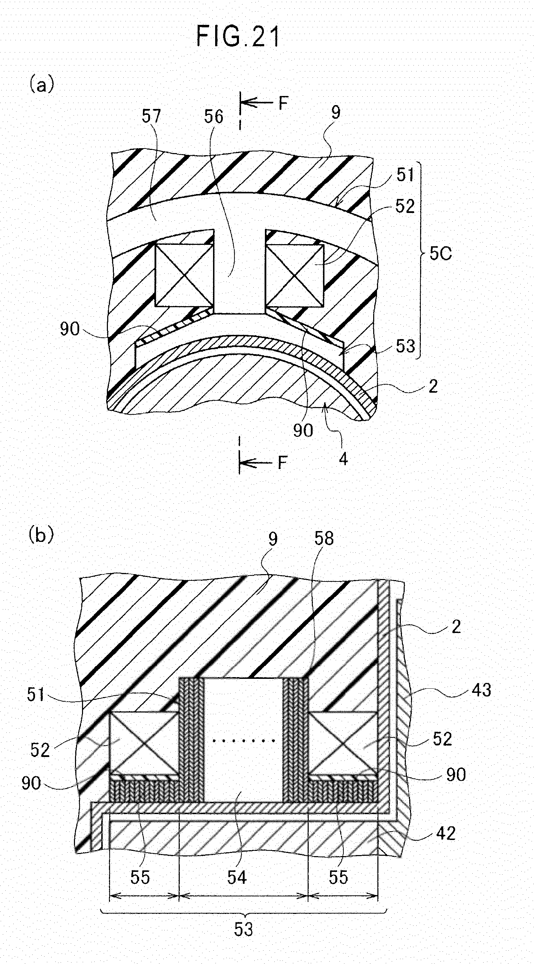

Next, the third embodiment according to the present invention will be explained with reference to the drawing. FIG. 21 shows a stator which is one of the components of a motor according to the present embodiment. Note that, in the following explanation for the present embodiment, the same elements as in the stator 5 in the first embodiment are indicated by the common reference numerals, and the overlapped explanations will not be repeated.

A stator 5C of the present embodiment includes, as in the case of the first embodiment, the stator core 51 provided with the circular section 57, the magnetic pole base section 54 and the connecting section 56 that connects the magnetic pole base section 54 to the circular section 57. The core members 59 in which the extended sections 55 are composed of the plural stacked plates 59a are attached to the magnetic pole base section 54 of the stator core 51.

The stator 5C of the present embodiment differs from the stator 5 of the first embodiment mainly in that protectors 90 for protecting the ring-like coil 52 are provided between the extended sections 55 and the ring-like coil 52.

The extended sections 55 are made of steel plates (metal) as described above. Therefore, the ring-like coil 52 may be damaged by the extended sections 55 during winding the ring-like coil 52, in particular, when winding the coil by a machine. Thus, the protectors 90 composed of a material with low electrical resistance such as resin of PBT are provided between the extended sections 55 and the ring-like coil 52 so as to wind the ring-like coil 52 with no damage. The protectors 90 are preferably formed along the inner surfaces of the extended sections 55 in order to provide sufficient space for the ring-like coil 52.

According to the constitution of the stator 5C of the present embodiment, the protectors 90 for protecting the ring-like coil 52 are provided between the extended sections 55 and the ring-like coil 52. Accordingly, the ring-like coil 52 can be wound without being damaged and as a result, it is possible to prevent the motor M from breaking down.

Although the protectors 90 that are characteristic of the present embodiment are applied to the stator 5 according to the first embodiment, the protectors 90 may be applied to the stator 105 according to the second embodiment.

### [Fourth embodiment]

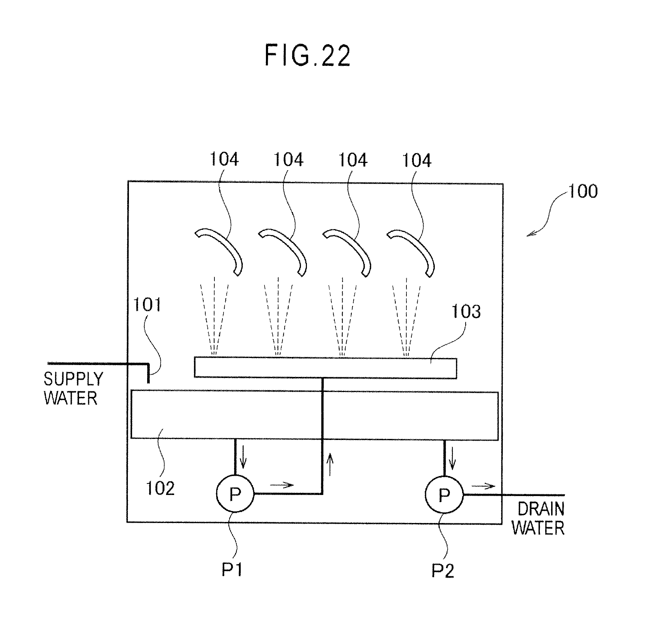

The fourth embodiment is an example in which the pump employing the motor of the present invention (for example, the first embodiment) serving as a drive source is applied to a dishwasher. FIG. 22 shows a dishwasher 100, in which water or hot water is supplied from a water supply inlet 101 to a water storage tank 102. The water or hot water supplied to the water storage tank 102 is delivered to a nozzle 103 by a wash pump P1. The water or hot water is then squirted from the nozzle 103 so that dishes 104 placed in the dishwasher 100 are washed.

In the present embodiment, the used water or hot water falls to the water storage tank 102 and is stored therein. The stored water or hot water is supplied again to the nozzle 103 by the wash pump P1. After circulation washing for a predetermined amount of time, the wash pump P1 is stopped and thereafter a drain pump P2 is operated so that the water in the water storage tank 102 is drained.

Subsequently, water or hot water is supplied to the water storage tank 102 from the water supply inlet 101 again for rinsing by operating the wash pump P1 for a predetermined amount of time. After the wash pump P1 is stopped, the drain pump P2 is operated to drain the water or hot water in the water storage tank 102. By repeating the operation for rinsing described above several times, the dishes 104 placed in the dishwasher 100 are washed.

In the present embodiment, the wash pump P1 and the drain pump P2 described above utilize the pump according to the present invention (the pump of the first embodiment). According to the present embodiment, the dishwasher 100 capable of energy saving due to the wash pump P1 and the drain pump P2 utilizing the pump of the present invention to achieve the improved drive output can be provided.

### [Fifth embodiment]

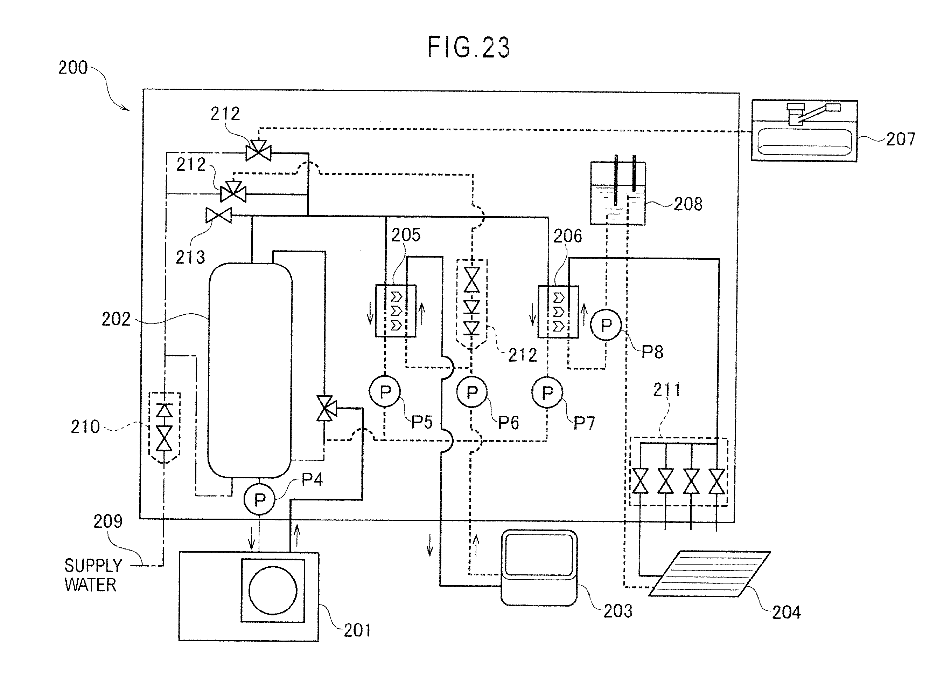

The fifth embodiment is an example in which the pump employing the motor of the present invention (the first embodiment) serving as a drive source is applied to a hot water supply apparatus. FIG. 23 shows a schematic diagram of an EcoCute system of a hot water supply unit 200 that is a hot water supply apparatus. The hot water supply unit 200 may be applied to EcoCute, gas hot water supply equipment and cogeneration.

The hot water supply unit 200 includes a heat pump unit 201, a hot water storage unit 202, a bathroom 203, a floor heating unit 204, and a heat exchanger for reheating water 205 or a heat exchanger for room heating 206.

The hot water supply unit 200 is provided with a hot water faucet 207 for a kitchen sink or a washstand, and an auxiliary tank 208 for storing hot water. In addition, a pressure reducing valve 210 is provided downstream of a water supply inlet 209, and thermomotive valves 211 are provided in the floor heating unit 204. Further, plural mixing valves 212 and a safety valve 213 are provided in each pipeline.

By driving and controlling plural pumps P4, P5, P6, P7 and P8, water or hot water at desired temperature and flow rate can be supplied to the bathroom 203 and the hot water faucet 207 for a kitchen sink or a washstand.

In the fifth embodiment, the pumps P4 to P8 utilize the pump according to the present invention (the pump of the first embodiment). According to the present embodiment, the hot water supply unit 300 capable of energy saving due to the respective pumps P4 to P8 utilizing the pump of the present invention to achieve the improved drive output can be obtained.

### [Sixth embodiment]

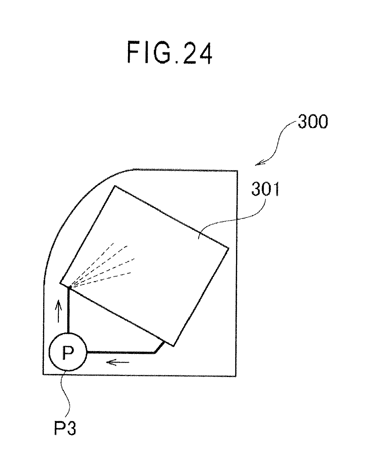

The sixth embodiment is an example in which the pump employing the motor of the present invention (the first embodiment) serving as a drive source is applied to a washing machine. FIG. 24 shows a washing machine 300. The washing machine 300 includes a washing machine tub 301 of which rotation is controlled by a motor (not shown in the figure). The washing machine 300 washes clothes by rotating the washing machine tub 301 and circulating water therein by a circulation pump P3.

In the washing machine 300 of the present embodiment, the circulation pump P3 utilizes the pump according to the present invention (the pump of the first embodiment). According to the present embodiment, the washing machine 300 capable of energy saving due to the circulation pump P3 utilizing the pump of the present invention to achieve the improved drive output can be obtained.

Although the preferred embodiments of the present invention have been described above, the present invention is not limited to the embodiments, and various modifications and improvements can be made within the scope of the present invention. For example, although the embodiments have been explained with the examples of the pump employing the motor serving as a drive source having an inner rotor structure, the present invention is not limited to the inner rotor structure. A motor having an outer rotor structure may also be applied to the present invention.

### REFERENCE SIGNS LIST

4 Rotor
5, 5A to 5C Stator
105, 105A to 105C Stator
42 Magnet
51 Stator core
52 Ring-like coil (coil)
53 Magnetic pole
54 Magnetic pole base section
55 Extended section
59 Core member
59a Stacked plate
60 Core member
60a Stacked plate
100 Dishwasher
200 Washing machine
300 Hot water supply unit
M, M1 Motor
P, P1 Pump

## Claims

1. A motor comprising:
a rotatable rotor (4) having a magnet (42) arranged in a circumferential direction of the rotor (4); and
a stator (5, 105) having a magnetic pole (53, 153) located to face the magnet (42), the magnetic pole (53, 153) comprising a magnetic pole base section (54, 154) and an extended section (55, 155) extended from the magnetic pole base section (54, 154) in an axial direction of the rotor (4),
wherein at least the extended section (55, 155) of the magnetic pole (53, 153) is composed of stacked plates (59a, 60a).

2. The motor according to claim 1, wherein the stator (5) comprises a stator core (51) provided with a circular section (57), the magnetic pole base section (54), and a connecting section (56) projecting from the circular section (57) toward the rotor (4) to connect the magnetic pole base section (54) to the circular section (57), and
a core member (59) in which the extended section (55) is formed by the stacked plates (59a) is fixed to the magnetic pole base section (54) of the stator core (51).

3. The motor according to claim 2, wherein a recess (70) is provided at a contact surface (54b, 54c) of the magnetic pole base section (54) with the core member (59).

4. The motor according to claim 1, wherein the stacked plates (59a, 60a) are stacked in the axial direction of the rotor (4).

5. The motor according to claim 1, wherein the stacked plates (59a, 60a) are stacked in the circumferential direction of the rotor (4).

6. The motor according to claim 1, wherein the stator (105) comprises a stator core (151) provided with a circular section (157) and a connecting section (156) projecting from the circular section (157) toward the rotor (4), and
a core member (60, 60A, 60B) in which the magnetic pole base section (154) and the extended section (155) are composed of the stacked plates (60a) is fixed to the connecting section (156) of the stator core (151).

7. The motor according to claim 6, wherein the core member (60A, 60B) is provided with a fixing section (80, 80A) attached to the connecting section (156) of the stator core (151).

8. The motor according to claim 7, wherein the fixing section (80A) is formed in such a manner that the connecting section (156) of the stator core (151) is fitted therein.

9. The motor according to claim 8, wherein the connecting section (156) is inserted into the fixing section (80A) of the stator core (151) to fix the core member (60B) to the connecting section (156).

10. The motor according to claim 2, wherein a coil (52) is wound on the connecting section (56) of the stator core (51), and
a protector (90) for protecting the coil (52) is provided between the extended section (55) and the coil (52).

11. A pump using the motor according to claim 1 as the driving source.

12. A hot-water supply device that have the pump according to claim 11 mounted therein.

13. A dishwasher that have the pump according to claim 11 mounted therein.

14. A washing machine that have the pump according to claim 11 mounted therein.

## Amended claims

### Amended claims under Art. 19.1 PCT

**1.** (Amended) A motor comprising:
a rotatable rotor (4) having a magnet (42) arranged in a circumferential direction of the rotor (4); and
a stator (5, 105) having a magnetic pole (53, 153) located to face the magnet (42), the magnetic pole (53, 153) comprising a magnetic pole base section (54, 154) and an extended section (55, 155) extended from the magnetic pole base section (54, 154) in an axial direction of the rotor (4),
wherein at least the extended section (55, 155) of the magnetic pole (53, 153) is composed of a plurality of stacked plates (59a, 60a), and the stacked plates (59a, 60a) are stacked in the axial direction of the rotor (4).

**2.** (Amended) A motor comprising:
a rotatable rotor (4) having a magnet (42) arranged in a circumferential direction of the rotor (4); and
a stator (5, 105) having a magnetic pole (53, 153) located to face the magnet (42), the magnetic pole (53, 153) comprising a magnetic pole base section (54, 154) and an extended section (55, 155) extended from the magnetic pole base section (54, 154) in an axial direction of the rotor (4),
wherein at least the extended section (55, 155) of the magnetic pole (53, 153) is composed of a plurality of stacked plates (59a, 60a), and the stacked plates (59a, 60a) are stacked in the circumferential direction of the rotor (4).

**3.** (Amended) The motor according to claim 1 or 2, wherein the stator (5) comprises a stator core (51) provided with a circular section (57), the magnetic pole base section (54), and a connecting section (56) projecting from the circular section (57) toward the rotor (4) to connect the magnetic pole base section (54) to the circular section (57), and
a core member (59) in which the extended section (55) is formed by the stacked plates (59a) is fixed to the magnetic pole base section (54) of the stator core (51).

**4.** (Amended) The motor according to claim 3, wherein a recess (70) is provided at a contact surface (54b, 54c) of the magnetic pole base section (54) with the core member (59).

**5.** (Amended) The motor according to claim 1 or 2, wherein the stator (105) comprises a stator core (151) provided with a circular section (157) and a connecting section (156) projecting from the circular section (157) toward the rotor (4), and
a core member (60, 60A, 60B) in which the magnetic pole base section (154) and the extended section (155) are composed of the stacked plates (60a) is fixed to the connecting section (156) of the stator core (151).

**6.** (Amended) The motor according to claim 5, wherein the core member (60A, 60B) is provided with a fixing section (80, 80A) attached to the connecting section (156) of the stator core (151).

**7.** (Amended) The motor according to claim 6, wherein the fixing section (80A) is formed in such a manner that the connecting section (156) of the stator core (151) is fitted therein.

**8.** (Amended) The motor according to claim 7, the connecting section (156) is inserted into the fixing section (80A) of the stator core (151) to fix the core member (60B) to the connecting section (156).

**9.** (Amended) The motor according to claim 3, wherein a coil (52) is wound on the connecting section (56) of the stator core (51), and
a protector (90) for protecting the coil (52) is provided between the extended section (55) and the coil (52).

**10.** (Amended) A pump using the motor according to claim 1 or 2 as the driving source.

**11.** (Amended) A hot-water supply device that have the pump according to claim 10 mounted therein.

**12.** (Amended) A dishwasher that have the pump according to claim 10 mounted therein.

**13.** (Amended) A washing machine that have the pump according to claim 10 mounted therein.

**14.** (Canceled)

Statement under Art. 19.1 PCT
The applicant, who received the International Search Report relating to the above-identified International Application transmitted on August 16, 2011, hereby files an amendment under Article 19(1), as in the attached replacement sheets.

The applicant hereby replaces the originally filed sheets Nos. 21 and 22 with the attached replacement sheets Nos. 21 and 22. Thus, the claims 1-13 are amended, and the claim 14 is canceled.

Claim 1: The claim 1 is amended based on the original claims 1 and 4 and on the description of paragraph [0027] and [0028] of the specification as originally filed.

Claim 2: The new claim 2 is based on the original claims 1 and 5 and on the description of paragraph [0038] and [0039] of the specification as originally filed.

Claim 3: The claim 3 is based on the original claim 2.

Claim 4: The claim 4 is based on the original claim 3.

Claim 5: The claim 5 is based on the original claim 6.

Claim 6: The claim 6 is based on the original claim 7.

Claim 7: The claim 7 is based on the original claim 8.

Claim 8: The claim 8 is based on the original claim 9.

Claim 9: The claim 9 is based on the original claim 10.

Claim 10: The claim 10 is based on the original claim 11.

Claim 11: The claim 11 is based on the original claim 12.

Claim 12: The claim 12 is based on the original claim 13.

Claim 13: The claim 13 is based on the original claim 14.
